(19) Europäisches Patentamt
European Patent Office
Office européen des brevets

(11) EP 4 550 018 A2

(12) EUROPEAN PATENT APPLICATION

(43) Date of publication:
07.05.2025 Bulletin 2025/19

(21) Application number: 24200235.0

(22) Date of filing: 13.09.2024

(51) International Patent Classification (IPC):
G02B 7/02 $^{(2021.01)}$          G02B 9/64 $^{(2006.01)}$
G02B 13/00 $^{(2006.01)}$          G02B 13/04 $^{(2006.01)}$

(52) Cooperative Patent Classification (CPC):
G02B 13/0045; G02B 7/028; G02B 9/64;
G02B 13/04

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
GE KH MA MD TN

(30) Priority: 30.10.2023 KR 20230146727

(71) Applicant: Samsung Electro-Mechanics Co., Ltd.
Gyeonggi-do (KR)

(72) Inventor: Chae, Kyu Min
Suwon-si, Gyeonggi-do (KR)

(74) Representative: Grünecker Patent- und
Rechtsanwälte
PartG mbB
Leopoldstraße 4
80802 München (DE)

(54) **IMAGING LENS SYSTEM**

(57) An imaging lens system includes a first lens, a second lens, a third lens, a fourth lens, a fifth lens, a sixth lens, a seventh lens, and an eighth lens, sequentially arranged from an object side. The seventh lens has a convex image-side surface, the eighth lens has positive refractive power, and the imaging lens system satisfies the following conditional expression: 1.10 < f3/f < 1.40, where f is a focal length of the imaging lens system, and f3 is a focal length of the third lens.

FIG. 1

**Description**

CROSS-REFERENCE TO RELATED APPLICATIONS

This application claims the benefit of priority to Korean Patent Application No. 10-2023-0146727 filed on October 30, 2023, in the Korean Intellectual Property Office, the entire disclosure of which is incorporated herein by reference for all purposes.

BACKGROUND

1. Field

The present disclosure relates to an imaging lens system capable of implementing constant optical performance regardless of a change in temperature of a surrounding environment.

2. Description of the Background

A small surveillance camera may be configured to capture image information within a surveillance zone. For example, the small surveillance camera may be mounted on a front bumper, a rear bumper, or the like of a vehicle, and may provide a captured image to a driver.

Early small surveillance cameras were designed to capture an image of an obstacle adjacent to a vehicle, and thus not only had relatively low resolution, but also had a high change in resolution according to a change in temperature between -40 and 80°C. However, as an autonomous driving function of a vehicle is increasingly required, there may be demand for development of a surveillance camera having high resolution and constant optical characteristics even under harsh temperature conditions.

The above information is presented as background information only to assist with an understanding of the present disclosure. No determination has been made, and no assertion is made, as to whether any of the above might be applicable as prior art with regard to the disclosure.

SUMMARY

This Summary is provided to introduce a selection of concepts in a simplified form that are further described below in the Detailed Description. This Summary is not intended to identify key features or essential features of the claimed subject matter, nor is it intended to be used as an aid in determining the scope of the claimed subject matter.

In one general aspect, an imaging lens system includes a first lens, a second lens, a third lens, a fourth lens, a fifth lens, a sixth lens, a seventh lens, and an eighth lens, sequentially arranged from an object side. The seventh lens has a convex image-side surface, the eighth lens has positive refractive power, and the imaging lens system satisfies the following conditional expression:

$$1.10 < f3/f < 1.40,$$

where f is a focal length of the imaging lens system, and f3 is a focal length of the third lens.

The first lens may have a concave image-side surface.

The second lens may have a convex image-side surface.

The third lens may have a convex image-side surface.

The fourth lens may have a concave image-side surface.

The fifth lens may have a convex image-side surface.

The sixth lens may have a concave image-side surface.

A camera module may include a housing, a lens barrel disposed in the housing and accommodating the imaging lens system, and an image sensor disposed in the housing at an imaging plane of the imaging lens system.

A coupling point (CP) of the lens barrel and the housing may be closer to an object-side than an image-side surface of the eighth lens, and the camera module may satisfy one or more of the following conditional expressions:

$$0.60 < BFL/CP < 0.82,$$

and

$$0.80 < f3/CP < 1.0,$$

where BFL is a distance from an image-side surface of the eighth lens to an imaging plane.

In another general aspect, an imaging lens system includes a first lens, a second lens, a third lens, a fourth lens, a fifth lens, a sixth lens, a seventh lens, and an eighth lens, sequentially arranged from an object side, wherein the imaging lens system satisfies the following conditional expression:

$$1.0 < (L1DTn+L4DTn)/(L5DTn+L8DTn) < 1.4,$$

where L1DTn is a rate of change in refractive index according to a change in temperature of the first lens, L4DTn is a rate of change in refractive index according to a change in temperature of the fourth lens, L5DTn is a rate of change in refractive index according to a change in temperature

of the fifth lens, and L8DTn is a rate of change in refractive index according to a change in temperature of the eighth lens.

The seventh lens may have a convex image-side surface.

The imaging lens system may satisfy the following conditional expression:

$$4.0 < |L3DTn| < 8.0 \ (10^{-6}/^{\circ}C),$$

where L3DTn is a refractive index rate of change according to the temperature change of the third lens.

A camera module may include a housing, a lens barrel disposed in the housing and accommodating the imaging lens system, and an image sensor disposed in the housing at an imaging plane of the imaging lens system, wherein the lens barrel may have a first coefficient of thermal expansion and the housing may have a second coefficient of thermal expansion different from the first coefficient of thermal expansion.

In another general aspect, an imaging lens system includes a first lens, a second lens, a third lens, a fourth lens, a fifth lens, a sixth lens, a seventh lens, and an eighth lens, sequentially arranged from an object side, wherein the seventh lens has a convex image-side surface, wherein the eighth lens has positive refractive power, and wherein the imaging lens system satisfies the following conditional expression:

$$4.0 < |L3DTn| < 8.0 \ (10^{-6}/^{\circ}C),$$

where L3DTn is a refractive index rate of change according to the temperature change of the third lens.

Other features and aspects will be apparent from the following detailed description, the drawings, and the claims.

BRIEF DESCRIPTION OF DRAWINGS

FIG. 1 is a configuration diagram of an imaging lens system according to a first embodiment of the present disclosure.

FIG. 2 is an aberration curve of the imaging lens system illustrated in FIG. 1.

FIG. 3 is an MTF curve of the imaging lens system illustrated in FIG. 1.

FIG. 4 is a curve illustrating a back focal length (BFL) according to a change in temperature of the imaging lens system illustrated in FIG. 1.

FIG. 5 is a configuration diagram of an imaging lens system according to a second embodiment of the present disclosure.

FIG. 6 is an aberration curve of the imaging lens system illustrated in FIG. 5.

FIG. 7 is an MTF curve of the imaging lens system illustrated in FIG. 5.

FIG. 8 is a curve illustrating BFL according to a change in temperature of the imaging lens system illustrated in FIG. 5.

FIG. 9 is a configuration diagram of an imaging lens system according to a third embodiment of the present disclosure.

FIG. 10 is an aberration curve of the imaging lens system illustrated in FIG. 9.

FIG. 11 is an MTF curve of the imaging lens system illustrated in FIG. 9.

FIG. 12 is a curve illustrating BFL according to a change in temperature of the imaging lens system illustrated in FIG. 9.

FIG. 13 is a configuration diagram of an imaging lens system according to a fourth embodiment of the present disclosure.

FIG. 14 is an aberration curve of the imaging lens system illustrated in FIG. 13.

FIG. 15 is an MTF curve of the imaging lens system illustrated in FIG. 13.

FIG. 16 is a curve illustrating BFL according to a change in temperature of the imaging lens system illustrated in FIG. 13.

FIG. 17 is a configuration diagram of an imaging lens system according to a fifth embodiment of the present disclosure.

FIG. 18 is an aberration curve of the imaging lens system illustrated in FIG. 17.

FIG. 19 is an MTF curve of the imaging lens system illustrated in FIG. 17.

FIG. 20 is a curve illustrating BFL according to a change in temperature of the imaging lens system illustrated in FIG. 17.

FIG. 21 is a configuration diagram of an imaging lens system according to a sixth embodiment of the present disclosure.

FIG. 22 is an aberration curve of the imaging lens system illustrated in FIG. 21.

FIG. 23 is an MTF curve of the imaging lens system illustrated in FIG. 21.

FIG. 24 is a curve illustrating BFL according to a change in temperature of the imaging lens system illustrated in FIG. 21.

FIG. 25 is a configuration diagram of an imaging lens system according to a seventh embodiment of the present disclosure.

FIG. 26 is an aberration curve of the imaging lens system illustrated in FIG. 25.

FIG. 27 is an MTF curve of the imaging lens system illustrated in FIG. 25.

FIG. 28 is a curve illustrating BFL according to a change in temperature of the imaging lens system illustrated in FIG. 25.

FIG. 29 is a cross-sectional view of a camera module including an imaging lens system according to an embodiment of the present disclosure.

Throughout the drawings and the detailed description, unless otherwise described, the same reference numerals refer to the same elements. The drawings may not be to scale, and the relative size, proportions, and depiction of elements in the drawings may be exaggerated for clarity, illustration, and convenience.

DETAILED DESCRIPTION

Hereinafter, while examples of the present disclosure will be described in detail with reference to the accompanying drawings, it is noted that examples are not limited to the same.
The following detailed description is provided to assist the reader in gaining a comprehensive understanding of the methods, apparatuses, and/or systems described herein. However, various changes, modifications, and equivalents of the methods, apparatuses, and/or systems described herein will be apparent after an understanding of this disclosure. For example, the sequences of operations described herein are merely examples, and are not limited to those set forth herein, but may be changed as will be apparent after an understanding of this disclosure, with the exception of operations necessarily occurring in a certain order. Also, descriptions of features that are known in the art may be omitted for increased clarity and conciseness.

The features described herein may be embodied in different forms, and are not to be construed as being limited to the examples described herein. Rather, the examples described herein have been provided merely to illustrate some of the many possible ways of implementing the methods, apparatuses, and/or systems described herein that will be apparent after an understanding of this disclosure.

Throughout the specification, when an element, such as a layer, region, or substrate is described as being "on," "connected to," or "coupled to" another element, it may be directly "on," "connected to," or "coupled to" the other element, or there may be one or more other elements intervening therebetween. In contrast, when an element is described as being "directly on," "directly connected to," or "directly coupled to" another element, there can be no other elements intervening therebetween.

As used herein, the term "and/or" includes any one and any combination of any two or more of the associated listed items; likewise, "at least one of" includes any one and any combination of any two or more of the associated listed items.

Although terms such as "first," "second," and "third" may be used herein to describe various members, components, regions, layers, or sections, these members, components, regions, layers, or sections are not to be limited by these terms. Rather, these terms are only used to distinguish one member, component, region, layer, or section from another member, component, region, layer, or section. Thus, a first member, component, region, layer, or section referred to in examples described herein may also be referred to as a second member, component, region, layer, or section without departing from the teachings of the examples.

Spatially relative terms, such as "above," "upper," "below," "lower," and the like, may be used herein for ease of description to describe one element's relationship to another element as shown in the figures. Such spatially relative terms are intended to encompass different orientations of the device in use or operation in addition to the orientation depicted in the figures. For example, if the device in the figures is turned over, an element described as being "above," or "upper" relative to another element would then be "below," or "lower" relative to the other element. Thus, the term "above" encompasses both the above and below orientations depending on the spatial orientation of the device. The device may also be oriented in other ways (rotated 90 degrees or at other orientations), and the spatially relative terms used herein are to be interpreted accordingly.

The terminology used herein is for describing various examples only, and is not to be used to limit the disclosure. The articles "a," "an," and "the" are intended to include the plural forms as well, unless the context clearly indicates otherwise. The terms "comprises," "includes," and "has" specify the presence of stated features, numbers, operations, members, elements, and/or combinations thereof, but do not preclude the presence or addition of one or more other features, numbers, operations, members, elements, and/or combinations thereof.

Due to manufacturing techniques and/or tolerances, variations of the shapes shown in the drawings may occur. Thus, the examples described herein are not limited to the specific shapes shown in the drawings, but include changes in shape that occur during manufacturing.

Herein, it is noted that use of the term "may" with respect to an example, for example, as to what an example may include or implement, means that at least one example exists in which such a feature is included or implemented while all examples are not limited thereto.

The features of the examples described herein may be combined in various ways as will be apparent after an understanding of this disclosure. Further, although the examples described herein have a variety of configurations, other configurations are possible as will be apparent after an understanding of this disclosure.

In the present disclosure, a first lens refers to a lens most adjacent to an object (or a subject), and an eighth lens refers to a lens most adjacent to an imaging plane (or an image sensor). In the present disclosure, units of a radius of curvature, a thickness, a distance from an object-side surface of the first lens to an imaging plane (TTL), a height of an imaging plane (IMGHT), and a focal length are indicated in millimeters (mm). In addition, units of a rate of change in refractive index (DTn) and coefficient of thermal expansion (CTE) described in this specification may be $10^{-6}/°C$.

A thickness of a lens, a gap between lenses, and a TTL refer to a distance along an optical axis. Also, in the descriptions of a shape of a lens, a configuration in which one surface is convex indicates that a paraxial region of the surface is convex, and a configuration in which one surface is concave indicates that a paraxial region of the surface is concave.

Thus, even when it is described that one surface of a lens is convex, an edge of the lens may be concave. Similarly, even when it is described that one surface of a lens is concave, an edge of the lens may be convex.

An aspect of the present disclosure may be to solve the above problems, and may provide an imaging lens system capable of achieving high resolution while suppressing a focus change magnitude due to rapid temperature deviation to 10 microns ($\mu$m) or less by using both a plastic lens and a glass lens.

An imaging lens system according to a first aspect of the present disclosure may include a plurality of lenses. For example, the imaging lens system according to the first aspect may include a first lens, a second lens, a third lens, a fourth lens, a fifth lens, a sixth lens, a seventh lens, and an eighth lens, sequentially arranged from an object side. The imaging lens system according to the first aspect may include a lens having a convex image-side surface. For example, in the imaging lens system according to the first aspect, the seventh lens may have a convex image-side surface. The imaging lens system according to the first aspect may include a lens having positive refractive power. For example, in the imaging lens system according to the first aspect, the eighth lens may have positive refractive power. The imaging lens system according to the first aspect may satisfy a unique conditional expression. For example, the imaging lens system according to the first aspect may satisfy the conditional expression $1.10 < f3/f < 1.40$. Where f is a focal length of the imaging lens system, and f3 is a focal length of the third lens.

An imaging lens system according to a second aspect of the present disclosure may include a plurality of lenses. For example, an imaging lens system according to the second aspect may include a first lens, a second lens, a third lens, a fourth lens, a fifth lens, a sixth lens, a seventh lens, and an eighth lens, sequentially arranged from an object side. The imaging lens system according to the second aspect may satisfy a unique conditional expression. For example, the imaging lens system according to the second aspect may satisfy the conditional expression $1.0 < (L1DTn+L4DTn)/L5DTn+L8DTn) < 1.4$. In the conditional expression, L1DTn is a rate of change in refractive index according to a change in temperature of the first lens, L4DTn is a rate of change in refractive index according to a change in temperature of the fourth lens, L5DTn is a rate of change in refractive index according to a change in temperature of the fifth lens, and L8DTn is a rate of change in refractive index according to a change in temperature of the eighth lens.

An imaging lens system according to a third aspect of the present disclosure may include a plurality of lenses. For example, an imaging lens system according to the third aspect may include a first lens, a second lens, a third lens, a fourth lens, a fifth lens, a sixth lens, a seventh lens, and an eighth lens, sequentially arranged from an object side. The imaging lens system according to the third aspect may include a stop. For example, the imaging lens system according to the third aspect may include a stop disposed between the second lens and the third lens. The imaging lens system according to the third aspect may include a lens having a convex image-side surface. For example, in the imaging lens system according to the third aspect, the seventh lens may have a convex image-side surface. The imaging lens system according to the third aspect may include a lens having positive refractive power. For example, in the imaging lens system according to the third aspect, the eighth lens may have positive refractive power. The imaging lens system according to the third aspect may be configured to minimize a change in focal length due to a change in temperature. For example, the imaging lens system according to the third aspect may satisfy the conditional expression $4.0 < L3DTn < 8.0\ (10^{-6}/°C)$, where L3DTn is a refractive index rate of change according to the temperature change of the third lens.

An imaging lens system according to a fourth aspect of the present disclosure may include first to eighth lenses sequentially arranged from an object side, and may satisfy one or more of the following conditional expressions:

$$2.60 < f2/f < 4.60$$

$$1.0 < f3/f < 1.40$$

$$-2.40 < f4/f < -1.20$$

In the conditional expressions, f2 is a focal length of the second lens, and f4 is a focal length of the fourth lens.

An imaging lens system according to a fifth aspect of the present disclosure includes first to eighth lenses sequentially arranged from an object side, and may satisfy one or more of the following conditional expressions:

$$-1.0 < f1/f3 < -0.6$$

$$2.40 < f2/f3 < 4.20$$

$$-2.0 < f4/f3 < -1.0$$

$$1.0 < f5/f3 < 2.0$$

$$-3.0 < f6/f3 < -2.0$$

$$1.60 < f7/f3 < 5.20$$

$$0.80 < f7/f8 < 1.20$$

$$0.30 < f8/f3+f5+f7) < 2.0$$

$$-14.0 < (f1+f2)/f3+f4) < -3.0$$

In the conditional expressions, f5 is a focal length of the fifth lens, f6 is a focal length of the sixth lens, f7 is a focal length of the seventh lens, and f8 is a focal length of the eighth lens.

An imaging lens system according to a sixth aspect of the present disclosure includes first to eighth lenses sequentially arranged from an object side, and may satisfy one or more of the following conditional expressions:

$$0.80 < BFL/IMGHT < 1.40$$

$$2.0 < (f3+BFL)/f < 2.40$$

$$-3.80 < R7/R12 < -2.40$$

$$0.60 < R7/R14 < 1.20$$

$$-0.80 < R14/f7 < -0.30$$

$$-1.0 < R14/f8 < -0.10$$

$$0.20 < R14/f8 < 0.80$$

In the conditional expressions, BFL is a distance from an image-side surface of the rearmost lens (eighth lens) to the imaging plane, IMGHT is a height of the imaging plane, R7 is a radius of curvature of an object-side surface of the fourth lens, and R12 is a radius of curvature of an image-side surface of the sixth lens, and R14 is a radius of curvature of an image-side surface of the seventh lens.

An imaging lens system according to a seventh aspect of the present disclosure includes first to eighth lenses sequentially arranged from an object side, and may satisfy one or more of the following conditional expressions:

$$4.0 < L3DTn < 8.0$$

$$0.42 < L1DTn/L3DTn < 1.0$$

$$1.0 < (L1DTn+L4DTn)/L5DTn+L8DTn) < 1.40$$

$$0.92 < (L4DTn+L5DTn)/L6DTn+L7DTn) < 1.20$$

In the conditional expressions, L6DTn is a rate of change in refractive index according to a change in temperature of the sixth lens, and L7DTn is a rate of change in refractive index according to a change in temperature of the seventh lens.

An imaging lens system according to an eighth aspect of the present disclosure includes two of more of the first to seventh aspects according to the following characteristics. For example, the imaging lens system according to the eighth aspect may include the characteristics of the first aspect, and may satisfy one or more of the conditional expressions according to the fifth aspect. As another example, the imaging lens system according to the eighth aspect may include characteristics of the second aspect, and may satisfy one or more of the conditional expressions according to the sixth or seventh aspect.

The imaging lens system according to the first to eighth aspects may include one or more lenses having the following characteristics as needed. As an example, the imaging lens system according to the first aspect may include one of the first to eighth lenses according to the following characteristics. As another example, the imaging lens system according to the second aspect may include two or more of the first to eighth lenses according to the following characteristics. However, the imaging lens system according to the above-described aspects does not necessarily include a lens according to the following characteristics. Below, characteristics of the first to eighth lenses will be described.

The first lens may have refractive power. For example, the first lens may have negative refractive power. The first lens may have a concave shape on one surface. For example, the first lens may have a concave image-side surface. The first lens may include a spherical surface or an aspherical surface. For example, both surfaces of the first lens may be spherical. The first lens may be formed of a material having high light transmittance and excellent processability. For example, the first lens may be formed of glass. The first lens may be configured to have characteristics advantageous for improving aberration. For example, the first lens may have a refractive index of 1.75 or more and an Abbe number of 45 or more.

The second lens may have refractive power. For example, the second lens may have positive refractive power. The second lens may have a convex shape on one surface. For example, the second lens may have a convex image-side surface. The second lens may include an aspherical surface. For example, both surfaces of the second lens may be aspherical. The second lens may be formed of a material having high light transmittance and excellent processability. For example, the second lens may be formed of a plastic material. The second lens may have a predetermined refractive index. For example, a refractive index of the second lens may be 1.64 or more. The second lens may have a predetermined Abbe number. For example, an Abbe number of the second lens may be greater than 20 and less than 30.

The third lens may have refractive power. For example, the third lens may have positive refractive power. The third lens may have a convex shape on one surface. For example, the third lens may have a convex image-side surface. The third lens may include an aspherical surface. For example, both surfaces of the third lens may be aspherical. The third lens may be formed of a material having high light transmittance and excellent processability. For example, the third lens may be formed of glass. The third lens may be configured to have characteristics advantageous for improving aberration. For example, the third lens may have a refractive index of 1.70 or more and an Abbe number of 45 or more.

The fourth lens may have refractive power. For example, the fourth lens may have negative refractive power. The fourth lens may have a concave shape on one surface. For example, the fourth lens may have a concave image-side surface. The fourth lens may include an aspherical surface. For example, both surfaces of the fourth lens may be aspherical. The fourth lens may be formed of a material having high light transmittance and excellent processability. For example, the fourth lens may be formed of a plastic material. The fourth lens may have a predetermined refractive index. For example, a refractive index of the fourth lens may be 1.6 or more. The fourth lens may have a predetermined Abbe number. For example, an Abbe number of the fourth lens may be greater than 20 and less than 30.

The fifth lens may have refractive power. For example, the fifth lens may have positive refractive power. The fifth lens may have a convex shape on one surface. For example, the fifth lens may have a convex image-side surface. The fifth lens may include an aspherical surface. For example, both surfaces of the fifth lens may be aspherical. The fifth lens may be formed of a material having high light transmittance and excellent processability. For example, the fifth lens may be formed of a plastic material. The fifth lens may have a predetermined refractive index. For example, a refractive index of the fifth lens may be less than 1.6. The fifth lens may have a predetermined Abbe number. For example, an Abbe number of the fifth lens may be greater than 50 and less than 60.

The sixth lens may have refractive power. For example, the sixth lens may have negative refractive power. The sixth lens may have a concave shape on one surface. For example, the sixth lens may have a concave image-side surface. The sixth lens may include an aspherical surface. For example, both surfaces of the sixth lens may be aspherical. The sixth lens may be formed of a material having high light transmittance and excellent processability. For example, the sixth lens may be formed of a plastic material. The sixth lens may have a predetermined refractive index. For example, a refractive index of the sixth lens may be substantially the same as or similar to the refractive index of the fourth lens. The sixth lens may have a predetermined Abbe number. For example, the refractive index of the sixth lens may be substantially the same as or similar to an Abbe number of the fourth lens.

The seventh lens may have refractive power. For example, the seventh lens may have positive refractive power. The seventh lens may have a convex shape on one surface. For example, the seventh lens may have a convex image-side surface. The seventh lens may include an aspherical surface. For example, both surfaces of the seventh lens may be aspherical. The seventh lens may be formed of a material having high light transmittance and excellent processability. For example, the seventh lens may be formed of a plastic material. The seventh lens may have a predetermined refractive index. As an example, a refractive index of the seventh lens may be substantially the same as or similar to the refractive index of the fifth lens. The seventh lens may have a predetermined Abbe number. For example, a refractive index of the seventh lens may be substantially the same as or similar to an Abbe number of the fifth lens.

The eighth lens may have refractive power. For example, the eighth lens may have positive or negative refractive power. The eighth lens may have a convex shape on one surface. For example, the eighth lens may have a convex object-side surface. The eighth lens may include an aspherical surface. For example, both surfaces of the eighth lens may be aspherical. The eighth lens may be formed of a material having high light transmittance and excellent processability. For example, the eighth lens may be formed of glass. The eighth lens may have a predetermined refractive index. For example, a refractive index of the eighth lens may be 1.56 or more. The eighth lens has a predetermined Abbe number. For example, an Abbe number of the eighth lens may be 60 or more.

An aspherical lens constituting an imaging lens system may be expressed by the following Equation 1:

Equation 1

$$Z = \frac{cr^2}{1 + \sqrt{1 - (1+k)c^2 r^2}} + Ar^4 + Br^6 + Cr^8 + Dr^{10} + Er^{12} + Fr^{14} + Gr^{16} + \cdots$$

In Equation 1, c is the reciprocal of a radius of curvature of a corresponding lens, k is a conic constant, r is a distance from any point on an aspherical surface to an optical axis, A, B, C, D, E, F, F, and G are aspherical surface constants, and Z (or SAG) is a height in an optical axis direction from a certain point on the aspherical surface to a vertex of the corresponding aspherical surface.

An imaging lens system may include lenses formed of different materials. For example, the first lens, third lens, and eighth lens may be formed of a different material from the second lens and fourth to seventh lenses. As a specific example, the first lens, third lens, and eighth lens are formed of a glass material that has a low coefficient of thermal expansion due to external shock and a change in temperature, and the second lens and fourth to seventh lenses are formed of a plastic material that is easy to process. However, the materials of the first to eighth lenses are not limited to the examples described above. For example, the first and third lenses may be formed of a glass material, and the second lens and fourth to eighth lenses may be formed of a plastic material.

The imaging lens system may include a stop, an imaging plane, and a filter.

The stop may be disposed between the lenses. For example, the stop may be disposed between the second lens and the third lens. As another example, the stop may be disposed on an image side of a lens with positive refractive power, or between a lens with positive refractive power and a lens with positive refractive power. The imaging plane may be formed at a point at which light refracted by the first to eighth lenses forms an image. The imaging plane may be formed by an image sensor. For example, the imaging plane may be formed on a surface of the image sensor or on an internal side of the image sensor. The filter may be disposed between the eighth lens and the imaging plane. The filter may block certain wavelengths of light. For example, the filter may block light in infrared wavelengths.

A camera module according to a ninth aspect of the present disclosure may include one of an imaging lens systems according to the first to eighth aspects. For example, the camera module according to the ninth aspect may include the imaging lens system according to the first aspect. The camera module according to the ninth aspect may include a lens barrel and a housing. In the camera module according to the ninth aspect, the lens barrel may be configured to accommodate an imaging lens system, and the housing may be configured to accommodate the lens barrel and an image sensor. In the camera module according to the ninth aspect, the lens barrel and housing may be formed of different materials or materials having different thermal expansion coefficients. For example, the lens barrel may be formed of a plastic material, and the housing may be formed of a metal material. As another example, the lens barrel may be formed of a material with a CTE of $6 \times 10^{-5}/{\circ}C$, and the housing may be formed of a material with a CTE of $2.3 \times 10^{-5}/{\circ}C$.

Hereinafter, example embodiments of the present disclosure will be described in detail with reference to the attached illustrative drawings.

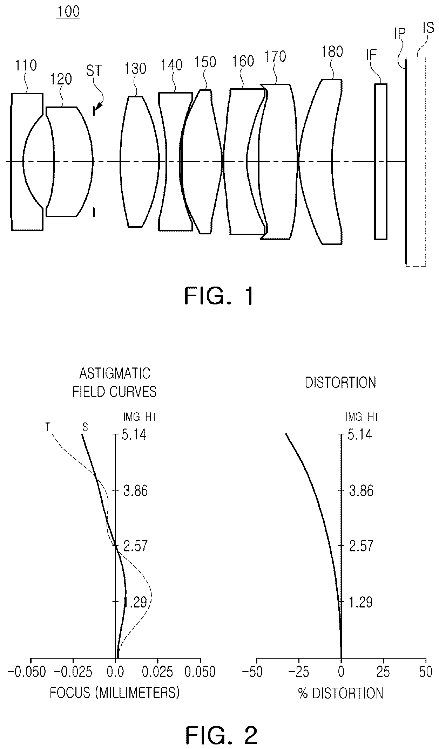

First, an imaging lens system according to a first embodiment will be described with reference to FIG. 1.

An imaging lens system 100 may include a first lens 110, a second lens 120, a third lens 130, a fourth lens 140, a fifth lens 150, a sixth lens 160, a seventh lens 170, and an eighth lens 180.

The first lens 110 may have negative refractive power, and may have a convex object-side surface and a concave image-side surface. The second lens 120 may have positive refractive power, and may have a concave object-side surface and a convex image-side surface. The third lens 130 may have positive refractive power, and may have a convex object-side surface and a convex image-side surface. The fourth lens 140 may have negative refractive power, and may have a concave object-side surface and a concave image-side surface. The fifth lens 150 may have positive refractive power, and may have a convex object-side surface and a convex image-side surface. The sixth lens 160 may have negative refractive power, and may have a convex object-side surface and a concave image-side surface. The seventh lens 170 may have positive refractive power, and may have a convex object-side surface and a convex image-side surface. The eighth lens 180 may have positive refractive power, and may have a convex object-side surface and a concave image-side surface.

The imaging lens system 100 may further include a stop ST, a filter IF, and an imaging plane IP. The stop ST may be disposed between the second lens 120 and the third lens 130. The imaging plane IP may be formed on an image sensor IS, and the filter IF may be disposed between the eighth lens 180 and the image plane IP.

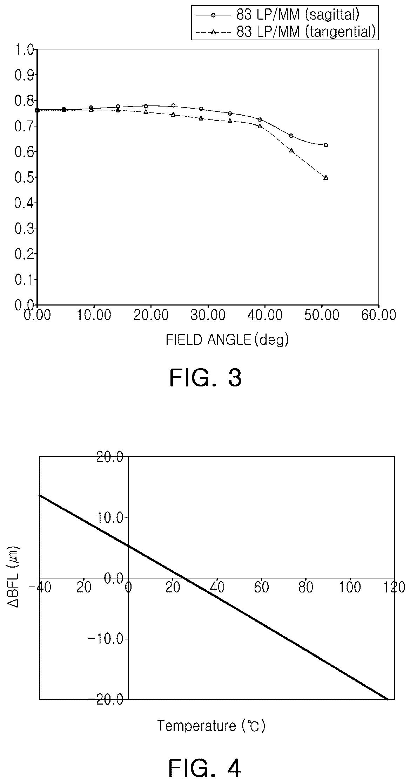

FIG. 2 illustrates an aberration curve of an imaging lens system according to the present embodiment, and FIGS. 3 and 4 illustrate modulation transfer function (MTF) characteristics and change amounts of a back focal length ($\Delta$BFL: $\mu$m) according to a temperature in an imaging lens system according to the present embodiment.

Tables 1 and 2 illustrate lens characteristics and aspherical values of an imaging lens system according to the present embodiment.

Table 1

| Surface No. | Component | Curvature Radius | Thickness/Distance | Refractive index | Abbe No. | DTn | CTE |
|---|---|---|---|---|---|---|---|
| S1 | 1st Lens | 300.000 | 0.845 | 1.7725 | 49.62 | 3.6 | 8.0 |
| S2 | | 4.979 | 2.356 | | | | |
| S3 | 2nd Lens | -19.349 | 2.894 | 1.6561 | 21.24 | -120.0 | 66.0 |
| S4 | | -8.854 | 0.107 | | | | |
| S5 | Stop | Infinity | 1.985 | - | - | - | - |
| S6 | 3rd Lens | 17.996 | 2.907 | 1.739 | 4906 | 7.5 | 6.0 |
| S7 | | -8.576 | 0.565 | | | | |
| S8 | 4th Lens | -16.650 | 1.000 | 1.6561 | 21.24 | -120.0 | 66.0 |
| S9 | | 12.663 | 0.173 | | | | |
| S10 | 5th Lens | 145875 | 2.985 | 1.5365 | 56.5 | -95.7 | 60.0 |
| S11 | | -7.465 | 0.126 | | | | |
| S12 | 6th Lens | 9.323 | 1.748 | 1.6561 | 21.24 | -120.0 | 66.0 |
| S13 | | 5.318 | 0.895 | | | | |
| S14 | 7th Lens | 115.713 | 2.905 | 1.5365 | 56.5 | -95.7 | 60.0 |
| S15 | | -22.010 | 0.133 | | | | |
| S16 | 8th Lens | 7.612 | 2.463 | 1.5909 | 67.17 | -2.0 | 9.7 |
| S17 | | 12.009 | 3.215 | | | | |
| S18 | Filter | Infinity | 0.900 | 1.5168 | 64.17 | 1.6 | 8.0 |
| S19 | | Infinity | 1.000 | | | | |
| S20 | | Infinity | 0.446 | - | - | - | - |
| S21 | Imaging Plane | Infinity | 0.000 | - | - | - | - |

Table 2

| Surface No. | K | A | B | C | D | E |
|---|---|---|---|---|---|---|
| S3 | 0 | -1.069E-03 | -3.207E-05 | 1.972E-06 | -1.716E-07 | 0 |
| S4 | 0 | -6.829E-04 | 1.549E-05 | -9.068E-07 | 4.245E-10 | 0 |
| S6 | 0 | -5.285E-04 | 3.626E-05 | -1.246E-06 | 1.990E-08 | 0 |
| S7 | 0 | 9.346E-04 | -4.242E-05 | 1.472E-06 | -1.724E-08 | 0 |
| S8 | 0 | 5.785E-04 | -9.262E-05 | 5.697E-06 | -1.095E-07 | 0 |
| S9 | 0 | 3.133E-04 | -1.829E-05 | 1.422E-06 | -4.402E-08 | 0 |
| S10 | 0 | 3.598E-03 | -9.299E-05 | 8.759E-07 | -6.954E-09 | 0 |
| S11 | 0 | 2.670E-03 | -8.591E-05 | 3.331E-06 | -5.069E-08 | 0 |
| S12 | 0 | -3.841E-03 | 9.486E-05 | 1.400E-06 | -6.173E-08 | 0 |
| S13 | 0 | -6.006E-03 | 2.596E-04 | -1.291E-05 | 5.749E-07 | -1.218E-08 |
| S14 | 0 | 3.540E-03 | -2.430E-04 | 9.174E-06 | -1.486E-07 | 0 |
| S15 | 0 | 1.081E-03 | 1.118E-06 | -2.125E-06 | 3.887E-08 | 0 |
| S16 | 0 | -1.767E-03 | 6.383E-05 | -2.161E-06 | 2.699E-08 | 0 |
| S17 | 0 | -1.276E-03 | 5.163E-05 | -1.412E-06 | 1.245E-08 | 0 |

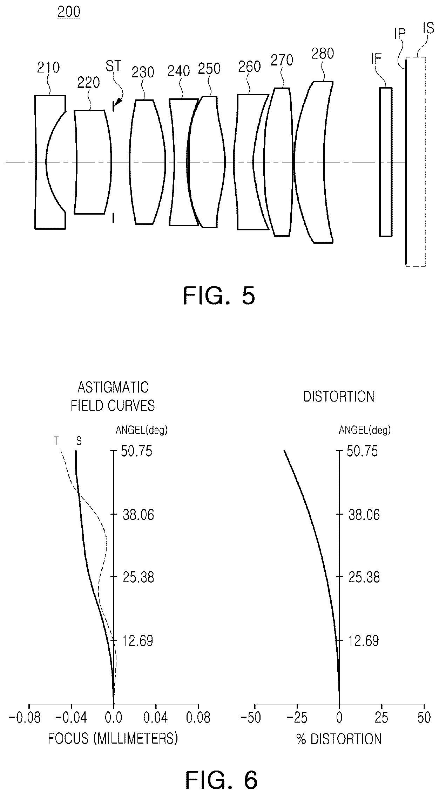

An imaging lens system according to a second embodiment will be described with reference to FIG. 5.

An imaging lens system 200 may include a first lens 210, a second lens 220, a third lens 230, a fourth lens 240, a fifth lens 250, a sixth lens 260, a seventh lens 270, and an eighth lens 280.

The first lens 210 may have negative refractive power, and may have a concave object-side surface and a concave image-side surface. The second lens 220 may have positive refractive power, and may have a concave object-side surface and a convex image-side surface. The third lens 230 may have positive refractive power, and may have a convex object-side surface and a convex image-side surface. The fourth lens 240 may have negative refractive power, and may have a concave object-side surface and a concave image-side surface. The fifth lens 250 may have positive refractive power, and may have a convex object-side surface and a convex image-side surface. The sixth lens 260 may have negative refractive power, and may have a convex object-side surface and a concave image-side surface. The seventh lens 270 may have positive refractive power, and may have a convex object-side surface and a convex image-side surface. The eighth lens 280 may have positive refractive power, and may have a convex object-side surface and a concave image-side surface.

The imaging lens system 200 may further include a stop ST, a filter IF, and an imaging plane IP. The stop ST may be disposed between the second lens 220 and the third lens 230. The imaging plane IP may be formed on an image sensor IS, and the filter IF may be disposed between the eighth lens 280 and the imaging plane IP.

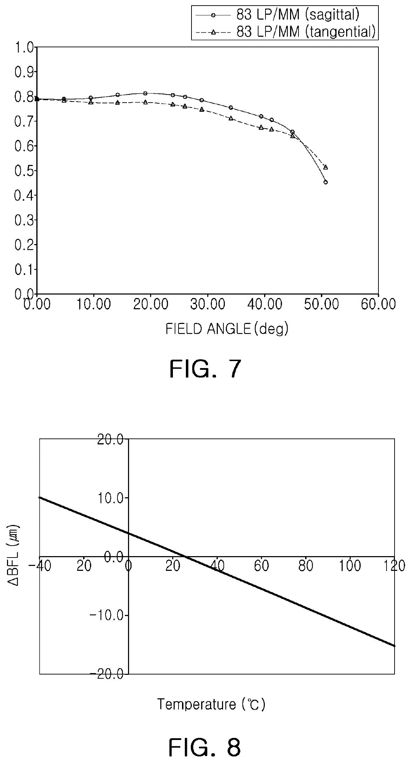

FIG. 6 illustrates an aberration curve of an imaging lens system according to the present embodiment, and FIGS. 7 and 8 illustrate MTF characteristics and change amounts of a back focal length ($\Delta$BFL: $\mu$m) according to a temperature in an imaging lens system according to the present embodiment.

Tables 3 and 4 illustrate lens characteristics and aspherical values of an imaging lens system according to the present embodiment.

Table 3

| Surface No. | Component | Curvature Radius | Thickness/Distance | Refractive index | Abbe No. | DTn | CTE |
|---|---|---|---|---|---|---|---|
| S1 | 1st Lens | -109.253 | 0.800 | 1.7725 | 49.62 | 3.6 | 8.0 |
| S2 | | 4.894 | 2.583 | | | | |
| S3 | 2nd Lens | -68.628 | 2.921 | 1.6561 | 21.24 | -120.0 | 66.0 |
| S4 | | -12.716 | 0.155 | | | | |
| S5 | Stop | Infinity | 1.328 | - | - | - | - |
| S6 | 3rd Lens | 17.619 | 2.993 | 1.7433 | 49.34 | 5.8 | 6.0 |
| S7 | | -8.464 | 0.769 | | | | |
| S8 | 4th Lens | -19.600 | 1.000 | 1.6561 | 21.24 | -120.0 | 66.0 |
| S9 | | 12.157 | 0.185 | | | | |
| S10 | 5th Lens | 92.809 | 3000 | 1.5365 | 56.5 | -95.7 | 60.0 |
| S11 | | -7.336 | 0.755 | | | | |
| S12 | 6th Lens | 9.965 | 1.617 | 1.6561 | 21.24 | -120.0 | 66.0 |
| S13 | | 5.261 | 0.927 | | | | |
| S14 | 7th Lens | 62.293 | 2.368 | 1.5365 | 56.5 | -95.7 | 60.0 |
| S15 | | -20.877 | 0.100 | | | | |
| S16 | 8th Lens | 9.604 | 2.495 | 1.5909 | 67.17 | -2.0 | 9.7 |
| S17 | | 20.323 | 4.674 | | | | |
| S18 | Filter | Infinity | 0.900 | 1.5168 | 64.17 | 1.6 | 8.0 |
| S19 | | Infinity | 2.900 | | | | |
| S20 | | Infinity | -2.886 | - | - | - | - |
| S21 | Imaging Plane | Infinity | 0.000 | - | - | - | - |

Table 4

| Surface No. | K | A | B | C | D | E |
|---|---|---|---|---|---|---|
| S3 | 0 | -3.428E-04 | -1.404E-05 | 2.400E-06 | -1.470E-07 | 0 |
| S4 | 0 | -3.143E-04 | 1.552E-05 | 1.775E-07 | -5.180E-08 | 0 |
| S6 | 0 | -4.882E-04 | 3.411E-05 | -9.317E-07 | 8.988E-09 | 0 |
| S7 | 0 | 9.650E-04 | -4.390E-05 | 1.734E-06 | -2.360E-08 | 0 |
| S8 | 0 | 7.755E-04 | -8.586E-05 | 4.231E-06 | -6.642E-08 | 0 |
| S9 | 0 | 7.682E-04 | -3.686E-05 | 7.898E-07 | -8.822E-09 | 0 |
| S10 | 0 | 3.770E-03 | -1.125E-04 | 1.519E-06 | 3.383E-09 | 0 |
| S11 | 0 | 3.145E-03 | -1.396E-04 | 6.093E-06 | -8.542E-08 | 0 |
| S12 | 0 | -3.196E-03 | 3.087E-05 | 4.289E-06 | -1.226E-07 | 0 |
| S13 | 0 | -6.238E-03 | 2.659E-04 | -1.272E-05 | 5.751E-07 | -1.281E-08 |
| S14 | 0 | 2.682E-03 | -1.666E-04 | 6.028E-06 | -8.735E-08 | 0 |
| S15 | 0 | 1.909E-03 | -5.242E-05 | -1.050E-06 | 3.970E-08 | 0 |
| S16 | 0 | -5.732E-04 | 2.114E-05 | -1.071E-06 | 2.136E-08 | 0 |
| S17 | 0 | -6.989E-04 | 5.321E-05 | -1.796E-06 | 2.415E-08 | 0 |

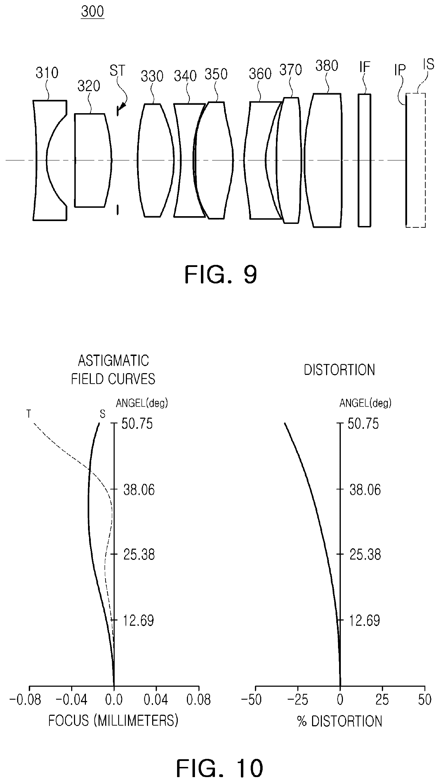

An imaging lens system according to a third embodiment will be described with reference to FIG. 9.

An imaging lens system 300 may include a first lens 310, a second lens 320, a third lens 330, a fourth lens 340, a fifth lens 350, a sixth lens 360, a seventh lens 370, and an eighth lens 380.

The first lens 310 may have negative refractive power, and may have a concave object-side surface and a concave image-side surface. The second lens 320 may have positive refractive power, and may have a concave object-side surface and a convex image-side surface. The third lens 330 may have positive refractive power, and may have a convex object-side surface and a convex image-side surface. The fourth lens 340 may have negative refractive power, and may have a concave object-side surface and a concave image-side surface. The fifth lens 350 may have positive refractive power, and may have a convex object-side surface and a convex image-side surface. The sixth lens 360 may have negative refractive power, and may have a convex object-side surface and a concave image-side surface. The seventh lens 370 may have positive refractive power, and may have a convex object-side surface and a convex image-side surface. The eighth lens 380 may have positive refractive power, and may have a convex object-side surface and a concave image-side surface.

The imaging lens system 300 may further include a stop ST, a filter IF, and an imaging plane IP. The stop ST may be disposed between the second lens 320 and the third lens 330. The imaging plane IP may be formed on an image sensor IS, and the filter IF may be disposed between the eighth lens 380 and the imaging plane IP.

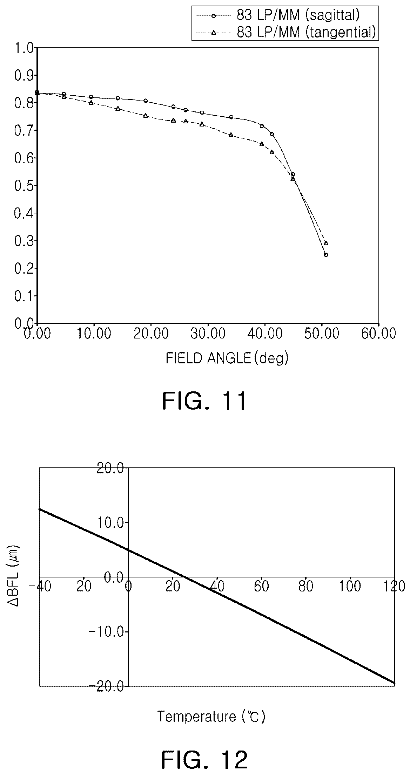

FIG. 10 illustrates an aberration curve of an imaging lens system according to the present embodiment, and FIGS. 11 and 12 illustrate MTF characteristics and change amounts of a back focal length (ΔBFL: μm) according to a temperature in an imaging lens system according to the present embodiment.

Tables 5 and 6 illustrate lens characteristics and aspherical values of an imaging lens system according to the present embodiment.

Table 5

| Surface No. | Component | Curvature Radius | Thickness/Distance | Refractive index | Abbe No. | DTn | CTE |
|---|---|---|---|---|---|---|---|
| S1 | 1st Lens | -45.200 | 0.800 | 1.7725 | 49.62 | 3.6 | 8.0 |
| S2 | | 4.973 | 2.323 | | | | |
| S3 | 2nd Lens | -565.205 | 2.935 | 1.6561 | 21.24 | -120.0 | 66.0 |
| S4 | | -12.710 | 0.470 | | | | |
| S5 | Stop | Infinity | 1.635 | - | - | - | - |
| S6 | 3rd Lens | 16.930 | 2.923 | 1.7433 | 49.34 | 5.8 | 6.0 |

(continued)

| Surface No. | Component | Curvature Radius | Thickness/Distance | Refractive index | Abbe No. | DTn | CTE |
|---|---|---|---|---|---|---|---|
| S7 | | -8.124 | 0.562 | | | | |
| S8 | 4th Lens | -16.728 | 1.000 | 1.6561 | 21.24 | -120.0 | 66.0 |
| S9 | | 12.645 | 0.179 | | | | |
| S10 | 5th Lens | 122.119 | 3000 | 1.5365 | 56.5 | -95.7 | 60.0 |
| S11 | | -7.341 | 0.890 | | | | |
| S12 | 6th Lens | 9090 | 1.739 | 1.6561 | 21.24 | -120.0 | 66.0 |
| S13 | | 5.136 | 0.893 | | | | |
| S14 | 7th Lens | 1504.231 | 2006 | 1.5365 | 56.5 | -95.7 | 60.0 |
| S15 | | -16.697 | 0.233 | | | | |
| S16 | 8th Lens | 17.577 | 3000 | 1.5831 | 59.46 | 2.7 | 7.1 |
| S17 | | 232.471 | 1.399 | | | | |
| S18 | Filter | Infinity | 0.900 | 1.5168 | 64.17 | 1.6 | 8.0 |
| S19 | | Infinity | 2.900 | | | | |
| S20 | | Infinity | 0.017 | - | - | - | - |
| S21 | Imaging Plane | Infinity | 0.000 | - | - | - | - |

Table 6

| Surface No. | K | A | B | C | D | E |
|---|---|---|---|---|---|---|
| S3 | 0 | -8.613E-05 | -5.501E-06 | 2.161E-06 | -1.050E-07 | 0 |
| S4 | 0 | -1.011E-04 | 3.945E-06 | 1.104E-06 | -6.805E-08 | 0 |
| S6 | 0 | -4.070E-04 | 1.665E-05 | -7.237E-08 | -1.066E-09 | 0 |
| S7 | 0 | 1.087E-03 | -6.371E-05 | 2.992E-06 | -4.573E-08 | 0 |
| S8 | 0 | 6.565E-04 | -9.720E-05 | 6.197E-06 | -1.286E-07 | 6.732E-11 |
| S9 | 0 | 9.341E-04 | -8.046E-05 | 4.030E-06 | -7.883E-08 | 0 |
| S10 | 0 | 4.036E-03 | -1.642E-04 | 5.101E-06 | -8.005E-08 | 0 |
| S11 | 0 | 2.844E-03 | -1.009E-04 | 5.210E-06 | -1.093E-07 | 0 |
| S12 | 0 | -3.033E-03 | 5.243E-05 | 2.885E-06 | -1.144E-07 | 0 |
| S13 | 0 | -6.491E-03 | 3.078E-04 | -1.528E-05 | 6.254E-07 | -1.364E-08 |
| S14 | 0 | 2.210E-03 | -7.097E-05 | 2.907E-07 | 1.851E-08 | 0 |
| S15 | 0 | 2.410E-03 | -8.133E-06 | -5.727E-06 | 1.388E-07 | 0 |
| S16 | 0 | -1.135E-05 | 8.838E-06 | -1.642E-06 | 4.149E-08 | 0 |
| S17 | 0 | -5.317E-04 | 3.091E-05 | -7.677E-07 | 4.478E-09 | 0 |

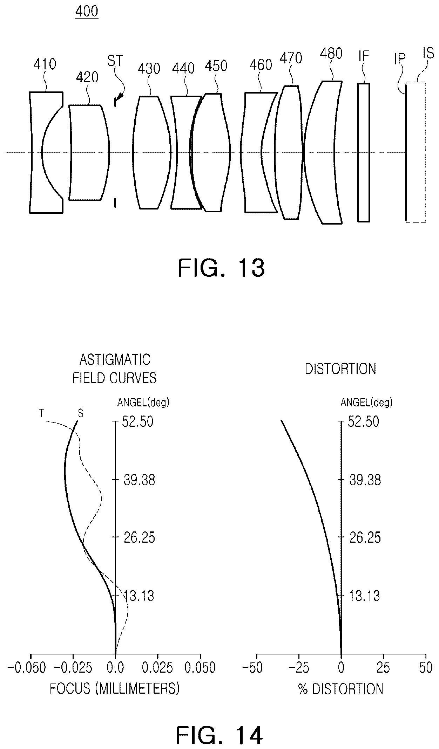

An imaging lens system according to a fourth embodiment will be described with reference to FIG. 13.

An imaging lens system 400 may include a first lens 410, a second lens 420, a third lens 430, a fourth lens 440, a fifth lens 450, a sixth lens 460, a seventh lens 470, and an eighth lens 480.

The first lens 410 may have negative refractive power, and may have a concave object-side surface and a concave image-side surface. The second lens 420 may have positive refractive power, and may have a concave object-side surface and a convex image-side surface. The third lens 430 may have positive refractive power, and may have a convex object-side surface and a convex image-side surface. The fourth lens 440 may have negative refractive power, and may have a concave object-side surface and a concave image-side surface. The fifth lens 450 may have positive refractive power, and may have a convex object-side surface and a convex image-side surface. The sixth lens 460 may have negative refractive power, and may have a convex object-side surface and a concave image-side surface. The seventh lens 470 may have positive refractive power, and may have a convex object-side surface and a convex image-side surface. The eighth lens 480 may have positive refractive power, and may have a convex object-side surface and a concave image-side surface.

The imaging lens system 400 may further include a stop ST, a filter IF, and an imaging plane IP. The stop ST may be disposed between the second lens 420 and the third lens 430. The imaging plane IP may be formed on an image sensor IS, and the filter IF may be disposed between the eighth lens 480 and the imaging plane IP.

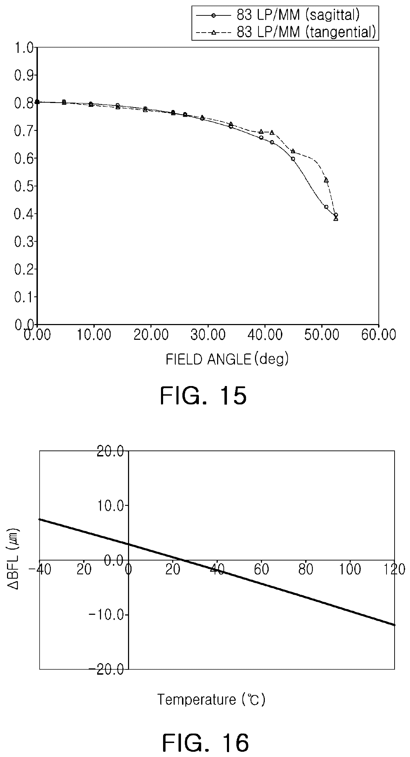

FIG. 14 illustrates an aberration curve of an imaging lens system according to the present embodiment, and FIGS. 15 and 16 illustrate MTF characteristics and change amounts of a back focal length (ΔBFL: μm) according to a temperature in an imaging lens system according to the present embodiment.

Tables 7 and 8 illustrate lens characteristics and aspherical values of an imaging lens system according to the present embodiment.

Table 7

| Surface No. | Component | Curvature Radius | Thickness/Distance | Refractive index | Abbe No. | DTn | CTE |
|---|---|---|---|---|---|---|---|
| S1 | 1st Lens | -69.023 | 0.800 | 1.7725 | 49.62 | 3.6 | 8.0 |
| S2 | | 4.940 | 2.317 | | | | |
| S3 | 2nd Lens | -62.662 | 3000 | 1.6561 | 21.24 | -120.0 | 66.0 |
| S4 | | -11.153 | 0.467 | | | | |
| S5 | Stop | Infinity | 1.406 | - | - | - | - |
| S6 | 3rd Lens | 16.856 | 3.000 | 1.7433 | 49.34 | 5.8 | 6.0 |
| S7 | | -8.485 | 0.500 | | | | |
| S8 | 4th Lens | -17.522 | 1.000 | 1.6561 | 21.24 | -120.0 | 66.0 |
| S9 | | 12.334 | 0.194 | | | | |
| S10 | 5th Lens | 149.612 | 3000 | 1.5365 | 56.5 | -95.7 | 60.0 |
| S11 | | -7.309 | 0.826 | | | | |
| S12 | 6th Lens | 9.610 | 1.652 | 1.6561 | 21.24 | -120.0 | 66.0 |
| S13 | | 5.223 | 1.055 | | | | |
| S14 | 7th Lens | 128.295 | 2209 | 1.5365 | 56.5 | -95.7 | 60.0 |
| S15 | | -16.894 | 0.100 | | | | |
| S16 | 8th Lens | 10.662 | 2.390 | 1.5909 | 67.17 | -2.0 | 9.7 |
| S17 | | 22.894 | 1.876 | | | | |
| S18 | Filter | Infinity | 0.900 | 1.5168 | 64.17 | 1.6 | 8.0 |
| S19 | | Infinity | 2.900 | | | | |
| S20 | | Infinity | 0.015 | - | - | - | - |
| S21 | Imaging Plane | Infinity | 0.000 | - | - | - | - |

Table 8

| Surface No. | K | A | B | C | D | E |
|---|---|---|---|---|---|---|
| S3 | 0 | -2.378E-04 | -9.767E-06 | 2.154E-06 | -1.228E-07 | 0 |
| S4 | 0 | -1.685E-04 | 9.506E-06 | 2.867E-07 | -4.565E-08 | 0 |
| S6 | 0 | -4.600E-04 | 2.727E-05 | -7.753E-07 | 1.546E-08 | 0 |
| S7 | 0 | 1.003E-03 | -4.662E-05 | 1.607E-06 | -1.215E-08 | 0 |
| S8 | 0 | 7.343E-04 | -7.696E-05 | 3.775E-06 | -6.218E-08 | 0 |

(continued)

| Surface No. | K | A | B | C | D | E |
|---|---|---|---|---|---|---|
| S9 | 0 | 8.759E-04 | -5.808E-05 | 2.151E-06 | -3.903E-08 | 0 |
| S10 | 0 | 3.955E-03 | -1.378E-04 | 2.878E-06 | -2.358E-08 | 0 |
| S11 | 0 | 2.883E-03 | -8.271E-05 | 2.518E-06 | -2.586E-08 | 0 |
| S12 | 0 | -3.285E-03 | 8.454E-05 | 7.775E-07 | -6.634E-08 | 0 |
| S13 | 0 | -6.327E-03 | 2.642E-04 | -1.232E-05 | 5.760E-07 | -1.338E-08 |
| S14 | 0 | 2.854E-03 | -2.222E-04 | 9.003E-06 | -1.302E-07 | 0 |
| S15 | 0 | 2.553E-03 | -8.783E-05 | -4.993E-07 | 4.185E-08 | 0 |
| S16 | 0 | -4.553E-04 | 3.340E-05 | -1.693E-06 | 2.918E-08 | 0 |
| S17 | 0 | -9.803E-04 | 7.870E-05 | -2.501E-06 | 2.899E-08 | 0 |

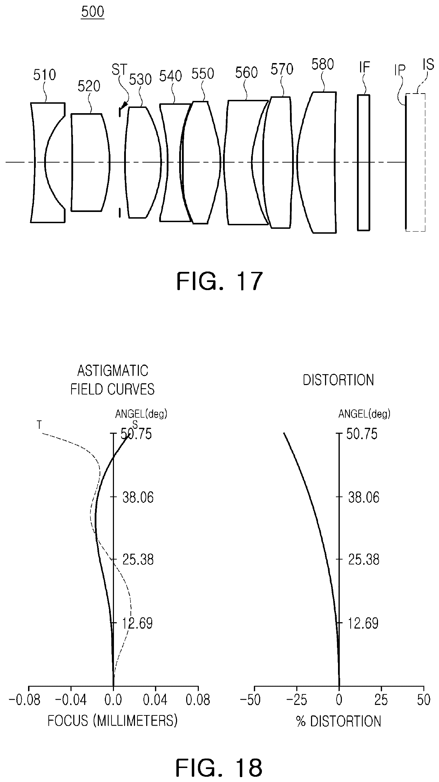

An imaging lens system according to a fifth embodiment will be described with reference to FIG. 17.

An imaging lens system 500 may include a first lens 510, a second lens 520, a third lens 530, a fourth lens 540, a fifth lens 550, a sixth lens 560, a seventh lens 570, and an eighth lens 580.

The first lens 510 may have negative refractive power, and may have a concave object-side surface and a concave image-side surface. The second lens 520 may have positive refractive power, and may have a concave object-side surface and a convex image-side surface. The third lens 530 may have positive refractive power, and may have a convex object-side surface and a convex image-side surface. The fourth lens 540 may have negative refractive power, and may have a concave object-side surface and a concave image-side surface. The fifth lens 550 may have positive refractive power, and may have a concave object-side surface and a convex image-side surface. The sixth lens 560 may have negative refractive power, and may have a convex object-side surface and a concave image-side surface. The seventh lens 570 may have positive refractive power, and may have a concave object-side surface and a convex image-side surface. The eighth lens 580 may have positive refractive power, and may have a convex object-side surface and a concave image-side surface.

The imaging lens system 500 may further include a stop ST, a filter IF, and an imaging plane IP. The stop ST may be disposed between the second lens 520 and the third lens 530. The imaging plane IP may be formed on an image sensor IS, and the filter IF may be disposed between the eighth lens 580 and the imaging plane IP.

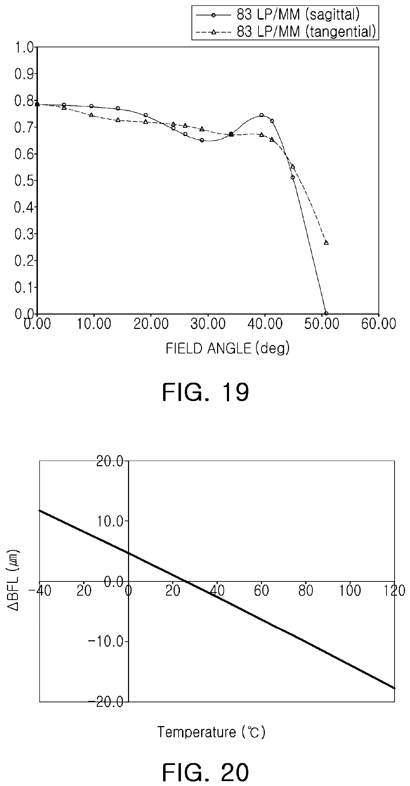

FIG. 18 illustrates an aberration curve of an imaging lens system according to the present embodiment, and FIGS. 19 and 20 illustrate MTF characteristics and change amounts of a back focal length ($\Delta$BFL: $\mu$m) according to a temperature in an imaging lens system according to the present embodiment.

Table 9 and Table 10 illustrate lens characteristics and aspherical values of an imaging lens system according to the present embodiment.

Table 9

| Surface No. | Component | Curvature Radius | Thickness/Distance | Refractive index | Abbe No. | DTn | CTE |
|---|---|---|---|---|---|---|---|
| S1 | 1st Lens | -33.572 | 0.800 | 1.7725 | 49.62 | 3.6 | 8.0 |
| S2 | | 5.154 | 2.162 | | | | |
| S3 | 2nd Lens | -198199 | 3000 | 1.6561 | 21.24 | -120.0 | 66.0 |
| S4 | | -11.675 | 0.776 | | | | |
| S5 | Stop | Infinity | 0.429 | - | - | - | - |
| S6 | 3rd Lens | 21.393 | 2.886 | 1.768 | 49.24 | 4.4 | 5.9 |
| S7 | | -7.805 | 0.504 | | | | |
| S8 | 4th Lens | -15.372 | 1.000 | 1.6561 | 21.24 | -120.0 | 66.0 |
| S9 | | 15.516 | 0.222 | | | | |
| S10 | 5th Lens | -53.027 | 3000 | 1.5365 | 56.5 | -95.7 | 60.0 |
| S11 | | -6.590 | 0.263 | | | | |

(continued)

| Surface No. | Component | Curvature Radius | Thickness/Distance | Refractive index | Abbe No. | DTn | CTE |
|---|---|---|---|---|---|---|---|
| S12 | 6th Lens | 11.770 | 2.227 | 1.6561 | 21.24 | -120.0 | 66.0 |
| S13 | | 5.496 | 0.910 | | | | |
| S14 | 7th Lens | -90.680 | 2.381 | 1.5365 | 56.5 | -95.7 | 60.0 |
| S15 | | -17.061 | 0.315 | | | | |
| S16 | 8th Lens | 10.475 | 3000 | 1.592 | 6702 | -2.0 | 8.0 |
| S17 | | 104.508 | 1.864 | | | | |
| S18 | Filter | Infinity | 0.900 | 1.5168 | 64.17 | 1.6 | 8.0 |
| S19 | | Infinity | 2.900 | | | | |
| S20 | | Infinity | 0.016 | - | - | - | - |
| S21 | Imaging Plane | Infinity | 0.000 | - | - | - | - |

Table 10

| Surface No. | K | A | B | C | D | E |
|---|---|---|---|---|---|---|
| S3 | 0 | -2.378E-04 | -9.767E-06 | 2.154E-06 | -1.228E-07 | 0 |
| S4 | 0 | -1.685E-04 | 9.506E-06 | 2.867E-07 | -4.565E-08 | 0 |
| S6 | 0 | -4.600E-04 | 2.727E-05 | -7.753E-07 | 1.546E-08 | 0 |
| S7 | 0 | 1.003E-03 | -4.662E-05 | 1.607E-06 | -1.215E-08 | 0 |
| S8 | 0 | 7.343E-04 | -7.696E-05 | 3.775E-06 | -6.218E-08 | 0 |
| S9 | 0 | 8.759E-04 | -5.808E-05 | 2.151E-06 | -3.903E-08 | 0 |
| S10 | 0 | 3.955E-03 | -1.378E-04 | 2.878E-06 | -2.358E-08 | 0 |
| S11 | 0 | 2.883E-03 | -8.271E-05 | 2.518E-06 | -2.586E-08 | 0 |
| S12 | 0 | -3.285E-03 | 8.454E-05 | 7.775E-07 | -6.634E-08 | 0 |
| S13 | 0 | -6.327E-03 | 2.642E-04 | -1.232E-05 | 5.760E-07 | -1.338E-08 |
| S14 | 0 | 2.854E-03 | -2.222E-04 | 9.003E-06 | -1.302E-07 | 0 |
| S15 | 0 | 2.553E-03 | -8.783E-05 | -4.993E-07 | 4.185E-08 | 0 |
| S16 | 0 | -4.553E-04 | 3.340E-05 | -1.693E-06 | 2.918E-08 | 0 |
| S17 | 0 | -9.803E-04 | 7.870E-05 | -2.501E-06 | 2.899E-08 | 0 |

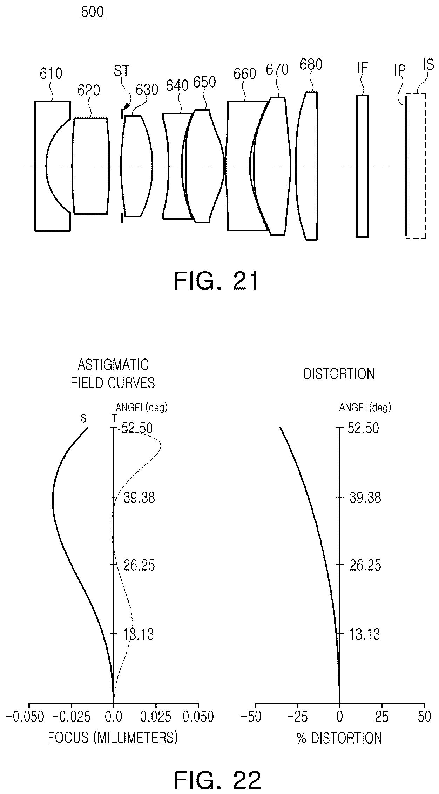

An imaging lens system according to a sixth embodiment will be described with reference to FIG. 21.

An imaging lens system 600 may include a first lens 610, a second lens 620, a third lens 630, a fourth lens 640, a fifth lens 650, a sixth lens 660, a seventh lens 670, and an eighth lens 680.

The first lens 610 may have negative refractive power, and may have a concave object-side surface and a concave image-side surface. The second lens 620 may have positive refractive power, and may have a convex object-side surface and a convex image-side surface. The third lens 630 may have positive refractive power, and may have a convex object-side surface and a convex image-side surface. The fourth lens 640 may have negative refractive power, and may have a concave object-side surface and a concave image-side surface. The fifth lens 650 may have positive refractive power, and may have a convex object-side surface and a convex image-side surface. The sixth lens 660 may have negative refractive power, and may have a convex object-side surface and a concave image-side surface. The seventh lens 670 may have positive refractive power, and may have a convex object-side surface and a convex image-side surface. The eighth lens 680 may have positive refractive power, and may have a convex object-side surface and a convex image-side surface.

The imaging lens system 600 may further include a stop ST, a filter IF, and an imaging plane IP. The stop ST may be disposed between the second lens 620 and the third lens 630. The image imaging IP may be formed on an image sensor IS, and the filter IF may be disposed between the eighth lens 680 and the imaging plane IP.

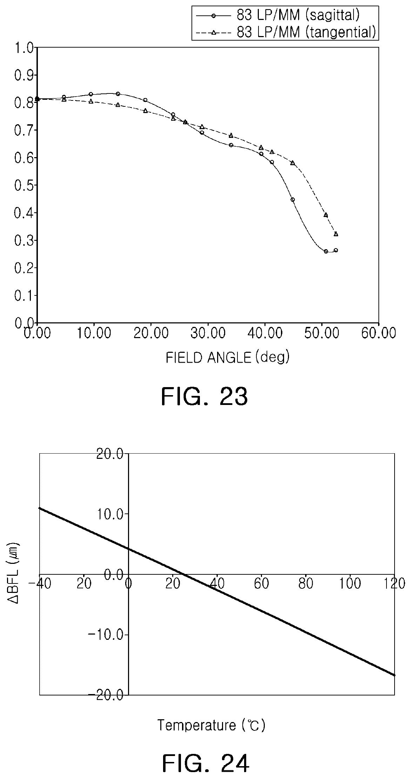

FIG. 22 illustrates an aberration curve of an imaging lens system according to the present embodiment, and FIGS. 23 and 24 illustrate MTF characteristics and change amounts of a back focal length (ΔBFL: μm) according to a temperature in an imaging lens system according to the present embodiment.

Tables 11 and 12 illustrate lens characteristics and aspherical values of an imaging lens system according to the present embodiment.

Table 11

| Surface No. | Component | Curvature Radius | Thickness/ Distance | Refractive Index | Abbe No. | DTn | CTE |
|---|---|---|---|---|---|---|---|
| S1 | 1st Lens | -539.097 | 0.800 | 1.7725 | 49.62 | 3.6 | 8.0 |
| S2 | | 4.396 | 1.986 | | | | |
| S3 | 2nd Lens | 36.297 | 2.837 | 1.8081 | 22.76 | -3.7 | 9.6 |
| S4 | | -42.663 | 0.955 | | | | |
| S5 | Stop | Infinity | -0.029 | - | - | - | - |
| S6 | 3rd Lens | 20.818 | 2.375 | 1.7725 | 49.5 | 4.4 | 8.0 |
| S7 | | -7.967 | 1.236 | | | | |
| S8 | 4th Lens | -14.426 | 1.000 | 1.6198 | 25.31 | -124.0 | 59.0 |
| S9 | | 9.713 | 0.314 | | | | |
| S10 | 5th Lens | 120753 | 2.883 | 1.5365 | 56.5 | -95.7 | 60.0 |
| S11 | | -4.874 | 0.100 | | | | |
| S12 | 6th Lens | 12.106 | 1.855 | 1.6198 | 25.31 | -124.0 | 59.0 |
| S13 | | 5.420 | 0.298 | | | | |
| S14 | 7th Lens | 32.008 | 2.822 | 1.5365 | 56.5 | -95.7 | 60.0 |
| S15 | | -12.093 | 0.386 | | | | |
| S16 | 8th Lens | 46.595 | 1.670 | 1.592 | 6702 | -2.0 | 8.0 |
| S17 | | -200.000 | 2.924 | | | | |
| S18 | Filter | Infinity | 0.900 | 1.5168 | 64.17 | 1.6 | 8.0 |
| S19 | | Infinity | 2.900 | | | | |
| S20 | | Infinity | 0.013 | - | - | - | - |
| S21 | Imaging Plane | Infinity | 0.000 | - | - | - | - |

Table 12

| Surface No. | K | A | B | C | D | E |
|---|---|---|---|---|---|---|
| S6 | 0 | -2.723E-04 | 7.675E-06 | -9.415E-07 | 1.453E-09 | 0 |
| S7 | 0 | 1.039E-03 | -7.492E-05 | 1.922E-06 | -3.627E-08 | 0 |
| S8 | 0 | 1.967E-03 | -2.893E-04 | 1.662E-05 | -5.356E-07 | 8.897E-09 |
| S9 | 0 | 4.117E-05 | -4.066E-05 | 3.975E-06 | -1.588E-07 | 0 |
| S10 | 0 | 1.774E-03 | 6.763E-05 | -3.614E-06 | 1.909E-08 | 0 |
| S11 | 0 | 3.790E-03 | -3.076E-05 | 7.432E-07 | 1.282E-07 | 0 |
| S12 | 0 | -3.755E-03 | 1.405E-04 | -4.138E-07 | -6.639E-08 | 0 |
| S13 | 0 | -4.832E-03 | 2.398E-04 | -1.310E-05 | 4.733E-07 | -8.612E-09 |
| S14 | 0 | 4.924E-03 | -2.960E-04 | 9.514E-06 | -1.364E-07 | 0 |
| S15 | 0 | 2.130E-03 | -4.579E-05 | -1.777E-07 | 1.043E-08 | 0 |

(continued)

| Surface No. | K | A | B | C | D | E |
|---|---|---|---|---|---|---|
| S16 | 0 | 9.952E-04 | -1.677E-05 | -6.407E-07 | 2.017E-08 | 0 |
| S17 | 0 | -1.038E-04 | 2.731E-05 | -1.530E-06 | 2.454E-08 | 0 |

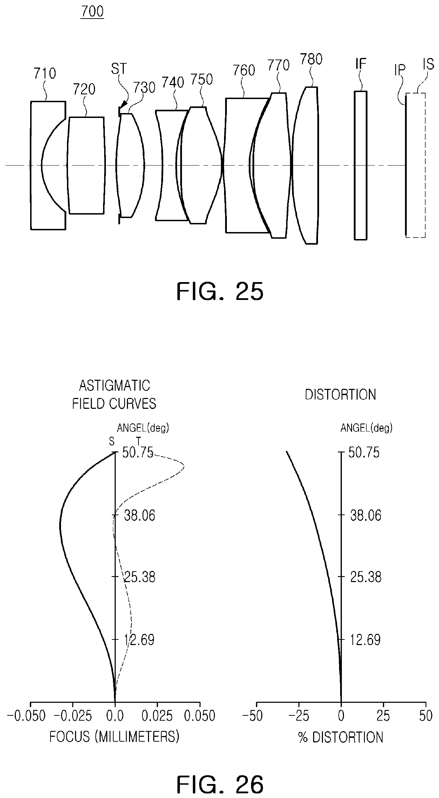

An imaging lens system according to a seventh embodiment will be described with reference to FIG. 25.

An imaging lens system 700 may include a first lens 710, a second lens 720, a third lens 730, a fourth lens 740, a fifth lens 750, a sixth lens 760, a seventh lens 770, and an eighth lens 780.

The first lens 710 may have negative refractive power, and may have a convex object-side surface and a concave image-side surface. The second lens 720 may have positive refractive power, and may have a convex object-side surface and a convex image-side surface. The third lens 730 may have positive refractive power, and may have a convex object-side surface and a convex image-side surface. The fourth lens 740 may have negative refractive power, and may have a concave object-side surface and a concave image-side surface. The fifth lens 750 may have positive refractive power, and may have a convex object-side surface and a convex image-side surface. The sixth lens 760 may have negative refractive power, and may have a convex object-side surface and a concave image-side surface. The seventh lens 770 may have positive refractive power, and may have a convex object-side surface and a convex image-side surface. The eighth lens 780 may have positive refractive power, and may have a convex object-side surface and a convex image-side surface.

The imaging lens system 700 may further include a stop ST, a filter IF, and an imaging plane IP. The stop ST may be disposed between the second lens 720 and the third lens 730. The imaging plane IP may be formed on an image sensor IS, and the filter IF may be disposed between the eighth lens 780 and the imaging plane IP.

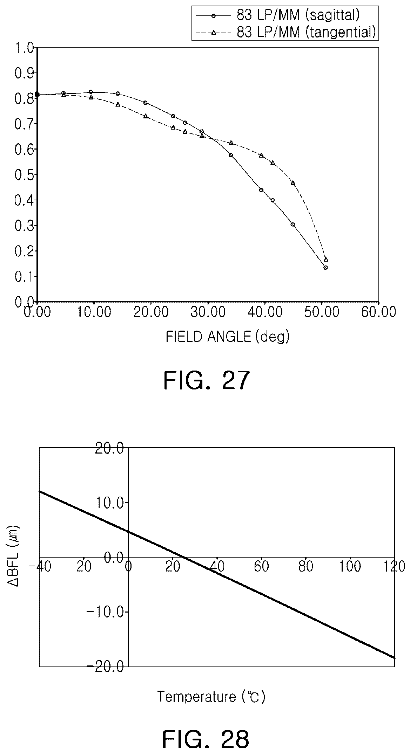

FIG. 26 illustrates an aberration curve of an imaging lens system according to the present embodiment, and FIGS. 27 and 28 illustrate MTF characteristics and change amounts of a back focal length ($\Delta$BFL: $\mu$m) according to a temperature in an imaging lens system according to the present embodiment.

Tables 13 and 14 illustrate lens characteristics and aspherical values of an imaging lens system according to the present embodiment.

Table 13

| Surface No. | Component | Curvature Radius | Thickness/Distance | Refractive index | Abbe No. | DTn | CTE |
|---|---|---|---|---|---|---|---|
| S1 | 1st Lens | 260.198 | 0.800 | 1.7725 | 49.62 | 3.6 | 8.0 |
| S2 | | 4.271 | 1.915 | | | | |
| S3 | 2nd Lens | 37.106 | 2.783 | 1.8081 | 22.76 | -3.7 | 9.6 |
| S4 | | -53.694 | 1.034 | | | | |
| S5 | Stop | Infinity | -0.207 | - | - | - | - |
| S6 | 3rd Lens | 17.104 | 2.061 | 1.7725 | 49.5 | 4.4 | 8.0 |
| S7 | | -8.027 | 1.344 | | | | |
| S8 | 4th Lens | -14.287 | 1.000 | 1.6198 | 25.31 | -124.0 | 59.0 |
| S9 | | 9.339 | 0.354 | | | | |
| S10 | 5th Lens | 161.819 | 3000 | 1.5365 | 56.5 | -95.7 | 60.0 |
| S11 | | -4.844 | 0.100 | | | | |
| S12 | 6th Lens | 11.506 | 1.928 | 1.6198 | 25.31 | -124.0 | 59.0 |
| S13 | | 5.443 | 0.292 | | | | |
| S14 | 7th Lens | 31.488 | 2.759 | 1.5365 | 56.5 | -95.7 | 60.0 |
| S15 | | -13.523 | 0.100 | | | | |
| S16 | 8th Lens | 34.440 | 1.932 | 1.592 | 6702 | -2.0 | 8.0 |
| S17 | | -200.000 | 2.666 | | | | |
| S18 | Filter | Infinity | 0.900 | 1.5168 | 64.17 | 1.6 | 8.0 |
| S19 | | Infinity | 2.900 | | | | |

(continued)

| Surface No. | Component | Curvature Radius | Thickness/Distance | Refractive index | Abbe No. | DTn | CTE |
|---|---|---|---|---|---|---|---|
| S20 | | Infinity | 0.014 | - | - | - | - |
| S21 | Imaging Plane | Infinity | 0.000 | - | - | - | - |

Table 14

| Surface No. | K | A | B | C | D | E |
|---|---|---|---|---|---|---|
| S6 | 0 | -3.009E-04 | 7.818E-06 | -1.133E-06 | 9.475E-09 | 0 |
| S7 | 0 | 8.912E-04 | -6.020E-05 | 1.077E-06 | -2.124E-08 | 0 |
| S8 | 0 | 1.752E-03 | -2.250E-04 | 1.222E-05 | -4.287E-07 | 8.700E-09 |
| S9 | 0 | 3.959E-04 | -6.469E-05 | 4.484E-06 | -1.590E-07 | 0 |
| S10 | 0 | 2.598E-03 | -5.064E-05 | 2.674E-06 | -9.794E-08 | 0 |
| S11 | 0 | 3.526E-03 | -1.913E-05 | -1.200E-07 | 1.762E-07 | 0 |
| S12 | 0 | -3.996E-03 | 1.252E-04 | 1.597E-06 | -1.157E-07 | 0 |
| S13 | 0 | -4.758E-03 | 2.321E-04 | -1.194E-05 | 4.098E-07 | -7.494E-09 |
| S14 | 0 | 4.886E-03 | -2.790E-04 | 8.573E-06 | -1.213E-07 | 0 |
| S15 | 0 | 1.880E-03 | -3.369E-05 | -1.836E-07 | 5.334E-09 | 0 |
| S16 | 0 | 8.246E-04 | -7.928E-06 | -6.249E-07 | 1.624E-08 | 0 |
| S17 | 0 | -1.214E-04 | 2.199E-05 | -1.205E-06 | 1.886E-08 | 0 |

Tables 15 to 18 illustrate optical characteristic values and conditional expression values of an imaging lens system according to the first to seventh embodiments.

Table 15

| | 1st Embodiment | 2nd Embodiment | 3rd Embodiment | 4th Embodiment | 5th Embodiment | 6th Embodiment | 7th Embodiment |
|---|---|---|---|---|---|---|---|
| f1 | -6.5623 | -6.0452 | -5.7594 | -5.9397 | -5.7323 | -5.6410 | -5.6287 |
| f2 | 22.4294 | 23.3067 | 197761 | 20.2132 | 18.7886 | 24.6650 | 27.5302 |
| f3 | 8.2427 | 8.0876 | 7.7722 | 7.9967 | 7.7802 | 7.7370 | 7.3341 |
| f4 | -10.8166 | -11.2951 | -10.8299 | -10.8883 | -11.6202 | -9.2193 | -8.9665 |
| f5 | 13.3275 | 12.8061 | 13.0125 | 13.0762 | 13.7171 | 8.8029 | 8.8219 |
| f6 | -22.8128 | -19.6647 | -21.7936 | -20.4961 | -18.2863 | -17.7143 | -18.9745 |
| f7 | 34.7245 | 29.4381 | 30.7946 | 27.9738 | 38.7328 | 16.7335 | 18.0188 |
| f8 | 29.1238 | 28.3635 | 32.4428 | 31.4863 | 19.4348 | 63.9968 | 49.7820 |
| TTL | 29.6480 | 29.5840 | 29.8040 | 296070 | 29.5550 | 28.2250 | 27.6750 |
| BFL | 5.5610 | 5.5880 | 5.2160 | 5.6910 | 5.6800 | 6.7370 | 6.4800 |
| f | 6.2570 | 6.2520 | 6.2550 | 6.2520 | 6.2550 | 6.2550 | 6.2360 |
| f number | 1.600 | 1.600 | 1.600 | 1.600 | 1.600 | 1.600 | 1.600 |
| IMGHT | 5.144 | 5.145 | 5.1430 | 5.281 | 5.1430 | 5.282 | 5.1450 |
| HFOV | 50.7500 | 50.7500 | 50.7500 | 52.5000 | 50.7500 | 52.5000 | 50.7500 |

Table 16

| Conditional Expression Values | 1st Embodiment | 2nd Embodiment | 3rd Embodiment | 4th Embodiment | 5th Embodiment | 6th Embodiment | 7th Embodiment |
|---|---|---|---|---|---|---|---|
| f2/f | 3.5847 | 3.7279 | 3.1616 | 3.2331 | 3.0038 | 3.9432 | 4.4147 |
| f3/f | 1.3173 | 1.2936 | 1.2426 | 1.2791 | 1.2438 | 1.2369 | 1.1761 |
| f4/f | -1.7287 | -1.8066 | -1.7314 | -1.7416 | -1.8578 | -1.4739 | -1.4379 |
| f1/f3 | -0.7961 | -0.7475 | -0.7410 | -0.7428 | -0.7368 | -0.7291 | -0.7675 |
| f2/f3 | 2.7211 | 2.8818 | 2.5445 | 2.5277 | 2.4149 | 3.1879 | 3.7537 |
| f4/f3 | -1.3123 | -1.3966 | -1.3934 | -1.3616 | -1.4936 | -1.1916 | -1.2226 |
| f5/f3 | 1.6169 | 1.5834 | 1.6742 | 1.6352 | 1.7631 | 1.1378 | 1.2029 |
| f6/f3 | -2.7677 | -2.4315 | -2.8040 | -2.5631 | -2.3504 | -2.2895 | -2.5871 |
| f7/f3 | 4.2128 | 3.6399 | 3.9621 | 3.4982 | 4.9784 | 2.1628 | 2.4568 |
| f7/f8 | 1.1923 | 1.0379 | 0.9492 | 0.8884 | 1.9930 | 0.2615 | 0.3620 |
| f81 (f3+f5+f7) | 0.5173 | 0.5635 | 0.6290 | 0.6420 | 0.3227 | 1.9234 | 1.4567 |
| (f1+f2)/ (f3+f4) | -6.1646 | -5.3817 | -4.5840 | -4.9362 | -3.4000 | -12.8342 | -13.4172 |

Table 17

| Conditional Expression Values | 1st Embodiment | 2nd Embodiment | 3rd Embodiment | 4th Embodiment | 5th Embodiment | 6th Embodiment | 7th Embodiment |
|---|---|---|---|---|---|---|---|
| BFL/IMGHT | 1.0819 | 1.0872 | 1.0148 | 1.1072 | 1.1051 | 1.3107 | 1.2607 |
| (f3+BFL)/f | 2.2061 | 2.1874 | 2.0765 | 2.1893 | 2.1519 | 2.3140 | 2.2152 |
| R7/R12 | -3.1309 | -3.7255 | -3.2570 | -3.3548 | -2.7969 | -2.6616 | -2.6248 |
| R7/R14 | 0.7565 | 0.9388 | 1.0019 | 1.0372 | 0.9010 | 1.1929 | 1.0565 |
| R14/f7 | -0.6338 | -0.7092 | -0.5422 | -0.6039 | -0.4405 | -0.7227 | -0.7505 |
| R14/f8 | -0.7557 | -0.7361 | -0.5147 | -0.5366 | -0.8779 | -0.1890 | -0.2716 |
| R15/f8 | 0.2614 | 0.3386 | 0.5418 | 0.3386 | 0.5390 | 0.7281 | 0.6918 |

Table 18

| Conditional Expression Values | 1st Embodiment | 2nd Embodiment | 3rd Embodiment | 4th Embodiment | 5th Embodiment | 6th Embodiment | 7th Embodiment |
|---|---|---|---|---|---|---|---|
| L3DTn | 75000 | 5.8000 | 5.8000 | 5.8000 | 4.4000 | 4.4000 | 4.4000 |
| L1DTn/L3DTn | 0.4800 | 0.6207 | 0.6207 | 0.6207 | 0.8182 | 0.8182 | 0.8182 |
| (L1DTn+L4TDTn)/ (L5DTn+L8DTn) | 1.1914 | 1.1914 | 1.2516 | 1.1914 | 1.1914 | 1.2323 | 1.2323 |
| (L4DTn+L5TDTn)/ (L6DTn+L7DTn) | 1.0000 | 1.0000 | 1.0000 | 1.0000 | 1.0000 | 1.0000 | 1.0000 |

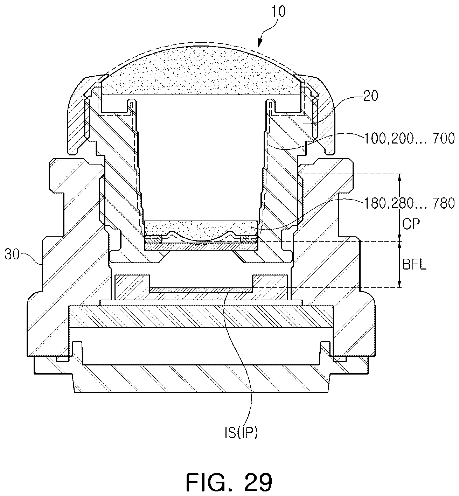

A camera module according to one or more embodiments will be described with reference to FIG. 29.

A camera module 10 according to one or more embodiments of the present disclosure may include a lens barrel 20, a housing 30, and an image sensor (IS). In addition, the camera module 10 may include an imaging lens system. For example, the camera module 10 according to one or more embodiments may include one of the imaging lens systems 100, 200, 300, 400, 500, 600, and 700 according to the first to seventh embodiments. For example, the first to eighth lenses of the imaging lens system may be sequentially accommodated inside the lens barrel 20. The housing 30 may be configured to accommodate the lens barrel 20 and the image sensor (IS).

The lens barrel 20 and the housing 30 can be coupled through a coupling means such as an adhesive. The coupling point of the lens barrel 20 and the housing 30 may be located closer to an object-side than an image-side surface of a rearmost lens 180, 280, 380, 480, 580, 680, and 780 of an imaging lens system. For example, the distance from the image-side surface of the rearmost lens 180, 280, 380, 480, 580, 680, and 780 of the imaging lens system to the coupling point (CP) of the lens barrel 20 and the housing 30 may be greater than 0.

A camera module 10 according to one or more embodiments of the present disclosure may satisfy one or more of the following conditional expressions:

$$0.60 < BFL/CP < 0.82$$

$$0.80 < f3/CP < 1.0$$

In the conditional expressions, BFL is a distance from an image-side surface of the rearmost lens 180, 280, 380, 480, 580, 680, and 780 of the imaging lens system 100, 200, 300, 400, 500, 600, and 700 accommodated in the lens barrel 20, to an imaging plane, and f3 is a focal length of a third lens 130, 230, 330, 430, 530, 630, and 730 of the imaging lens system 100, 200, 300, 400, 500, 600, and 700.

The lens barrel 20 and housing 30 may be formed of different materials. For example, the lens barrel 20 may be formed of a plastic material, and the housing 30 may be formed of a metal material. As another example, the lens barrel 20 is formed of a material with a CTE of $6 \times 10^{-5}/°C$, and the housing 30 may be formed of a material with a CTE of $2.3 \times 10^{-5}/°C$.

The camera module 10 configured as above may minimize the change in focal length due to temperature changes through the lens barrel 20, housing 30, and imaging lens system (100, 200, 300, 400, 500, 600, 700).

According to one or more aspects and embodiments as disclosed herein, an imaging lens system may implement constant optical characteristics (focal length) in a wide temperature range from a high temperature environment of 80°C to a low temperature environment of -40°C.

While specific examples have been shown and described above, it will be apparent after an understanding of this disclosure that various changes in form and details may be made in these examples without departing from the spirit and scope of the claims and their equivalents. The examples described herein are to be considered in a descriptive sense only, and not for purposes of limitation. Descriptions of features or aspects in each example are to be considered as being applicable to similar features or aspects in other examples. Suitable results may be achieved if the described techniques are performed in a different order, and/or if components in a described system, architecture, device, or circuit are combined in a different manner, and/or replaced or supplemented by other components or their equivalents. Therefore, the scope of the disclosure is defined not by the detailed description, but by the claims and their equivalents, and all variations within the scope of the claims and their equivalents are to be construed as being included in the disclosure.

**Claims**

1. An imaging lens system comprising:

   a first lens, a second lens, a third lens, a fourth lens, a fifth lens, a sixth lens, a seventh lens, and an eighth lens, sequentially arranged from an object side,
   wherein the seventh lens has a convex image-side surface,
   wherein the eighth lens has positive refractive power, and
   wherein the imaging lens system satisfies the following conditional expression:

$$1.10 < f3/f < 1.40,$$

   where f is a focal length of the imaging lens system, and f3 is a focal length of the third lens.

2. The imaging lens system of claim 1, wherein the first lens has a concave image-side surface.

3. The imaging lens system of claim 1, wherein the second lens has a convex image-side surface.

4. The imaging lens system of claim 1, wherein the third lens has a convex image-side surface.

5. The imaging lens system of claim 1, wherein the fourth lens has a concave image-side surface.

6. The imaging lens system of claim 1, wherein the fifth lens has a convex image-side surface.

7. The imaging lens system of claim 1, wherein the sixth lens has a concave image-side surface.

8. An imaging lens system comprising:

   a first lens, a second lens, a third lens, a fourth lens, a fifth lens, a sixth lens, a seventh lens, and an eighth lens, sequentially arranged from an object side,
   wherein the imaging lens system satisfies the following conditional expression:

   $$1.0 < (L1DTn+L4DTn)/(L5DTn+L8DTn) < 1.4,$$

   where L1DTn is a rate of change in refractive index according to a change in temperature of the first lens, L4DTn is a rate of change in refractive index according to a change in temperature of the fourth lens, L5DTn is a rate of change in refractive index according to a change in temperature of the fifth lens, and L8DTn is a rate of change in refractive index according to a change in temperature of the eighth lens.

9. The imaging lens system of claim 8, wherein the first lens has a concave image-side surface.

10. The imaging lens system of claim 8, wherein the second lens has a convex image-side surface.

11. The imaging lens system of claim 8, wherein the third lens has a convex image-side surface.

12. The imaging lens system of claim 8, wherein the fourth lens has a concave image-side surface.

13. The imaging lens system of claim 8, wherein the fifth lens has a convex image-side surface.

14. The imaging lens system of claim 8, wherein the sixth lens has a concave image-side surface.

15. The imaging lens system of claim 8, wherein the seventh lens has a convex image-side surface.

FIG. 1

FIG. 2

FIG. 3

FIG. 4

FIG. 5

FIG. 6

FIG. 7

FIG. 8

300

310   320   ST   330   340   350   360   370   380   IF   IP   IS

## FIG. 9

ASTIGMATIC
FIELD CURVES

ANGEL(deg)

T          S
50.75

38.06

25.38

12.69

-0.08  -0.04  0.0  0.04  0.08
FOCUS (MILLIMETERS)

DISTORTION

ANGEL(deg)

50.75

38.06

25.38

12.69

-50    -25    0    25    50
% DISTORTION

## FIG. 10

FIG. 11

FIG. 12

400

## FIG. 13

## FIG. 14

FIG. 15

FIG. 16

500

FIG. 17

ASTIGMATIC
FIELD CURVES

DISTORTION

FOCUS (MILLIMETERS)

% DISTORTION

FIG. 18

FIG. 19

FIG. 20

600

FIG. 21

ASTIGMATIC
FIELD CURVES

DISTORTION

ANGEL(deg)

ANGEL(deg)

S

T

52.50

52.50

39.38

39.38

26.25

26.25

13.13

13.13

-0.050 -0.025 0.0 0.025 0.050
FOCUS (MILLIMETERS)

-50 -25 0 25 50
% DISTORTION

FIG. 22

FIG. 23

FIG. 24

<u>700</u>

710 720 ST 730 740 750 760 770 780 IF IP IS

**FIG. 25**

ASTIGMATIC
FIELD CURVES

DISTORTION

ANGEL(deg)

S    T
50.75

38.06

25.38

12.69

-0.050 -0.025 0.0 0.025 0.050
FOCUS (MILLIMETERS)

ANGEL(deg)

50.75

38.06

25.38

12.69

-50    -25    0    25    50
% DISTORTION

**FIG. 26**

FIG. 27

FIG. 28

FIG. 29

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- KR 1020230146727